Europäisches Patentamt

European Patent Office

Office européen des brevets

(19)

(11) Publication number:

**0 390 401**
**A2**

# EUROPEAN PATENT APPLICATION

(12)

(21) Application number: 90302973.4

(22) Date of filing: 20.03.90

(51) Int. Cl.⁵: **C09D 11/06**

(30) Priority: 29.03.89 JP 79284/89

(43) Date of publication of application:
03.10.90 Bulletin 90/40

(84) Designated Contracting States:
DE DK FR GB IT NL

(71) Applicant: **Nikken Chemical Laboratory Co., Ltd.**
**16-1 Sakae, 2-chome**
**Naka-Ku Nagoya(JP)**

(72) Inventor: **Mio, Katsumi**
**109-2, Fujimiya, Akadohshicho**
**Kohnan-Shi, Aichi-Ken(JP)**

(74) Representative: **Gilding, Martin John et al**
**Eric Potter & Clarkson St. Mary's Court St.**
**Mary's Gate**
**Nottingham NG1 1LE(GB)**

(54) **Additive to an offset printing ink.**

(57) An additive to an offset printing ink which contains at least one kind of higher alcohol and at least one component for an ink vehicle. Preferably a monohydric higher alcohol having 12 to 18 carbons in the carbon chain is used as the higher alcohol. Also, preferably a drying oil, such as linseed oil, is used as the component for an ink vehicle.

EP 0 390 401 A2

**Additive to an Offset Printing Ink**

FIELD OF THE INVENTION

This invention relates to an additive to an ink used for offset lithography.

BACKGROUND OF THE INVENTION

Lithography is based on the principle that grease and water are mutually repellent. In offset lithography, printing areas on a printing plate are treated with grease, but non-printing parts thereon are not treated therewith. The printing plate is coated with water. The water does not stay on the greasy printing areas, but stays on the non-printing parts. Ink is applied on the printing plate. The printing areas hold the ink, but the non-printing parts reject the greasy ink. The ink is first transferred to the blanket cylinder, and is thence transferred to the paper which is pressed against the blanket cylinder by the impression cylinder.

The water applied on the printing plate not only does not allow the ink to stay on the non-printing parts, but also accelerates the transfer of the ink (on the printing areas) to the blanket cylinder.

The conventional offset printing ink contains a cobalt salt of an organic acid as a drier, or an agent for accelerating the drying of the ink. The vehicle in the ink dries by oxidizing. That is, the vehicle in the ink dries by taking oxygen into the portions thereof where double bonds exist. The cobalt ion acts as a catalyst for accelerating the oxidization of the vehicle.

However, since a cobalt salt of an organic acid has such a chemical structure that the cobalt salt acts as an oil-water surfactant, the water, which is expected to produce a clear-cut image, may be emulsified and dispersed in the ink. Therefore, contrary to the expectation, the image printed on the paper may become indistinct. Also, since the water emulsified and dispersed in the ink does not readily evaporate from the vehicle in the ink, the image printed on the paper may not have a beautiful gloss after the image has dried.

Moreover, since the cobalt ion in the ink permanently acts as the foregoing catalyst, oxygen is finally introduced into all the portions of the components of the ink where double bonds exist. Consequently the film formed on the surface of the ink formed by the drying of the ink may have a poor pliability and, hence, the film may crack readily.

An image offset printed on a paper may be transferred to pottery or glass while applying heat to the pottery or glass. However, with the conventional offset printing ink, the surface of the image thus transferred to pottery or glass may be corrugated. Also, with the conventional offset printing ink, the cobalt ions contained in the vehicle of the ink (image) transferred to pottery or glass may be oxidized with the result that the image transferred thereto is polluted.

Also, it may be necessary to add a diluent, such as a varnish or a reducer, to an offset printing ink to print a paper properly under a particular temperature or humidity or the like. And if a diluent is added to the ink, the viscosity of the ink is reduced with the result that the portion of the paper not printed with an image may be polluted with the ink or the printed image (transferred ink) may not dry quickly. A drier (a cobalt salt of an organic acid) may be further added to an offset printing ink containing a diluent to accelerate the drying of such an ink. However, the further addition of a drier may result in an unclear printing.

SUMMARY OF THE INVENTION

It is the object of the invention to provide a composition which may be added to an offset printing ink to free the ink from the above-mentioned drawbacks of the conventional offset printing ink.

DETAILED DESCRIPTION OF PREFERRED EMBODIMENTS

According to the invention, at least one kind of higher alcohol and at least one component for an ink

2

vehicle are used to prepare a composition to be added to an offset printing ink.

According to the invention, it is not necessary to add a drier to an offset printing ink, but instead the foregoing composition is added to the ink to free the ink from the drawbacks produced if a drier is added thereto.

Preferably a monohydric higher alcohol having 12 to 18 carbons in the carbon chain is used as the higher alcohol. For example, n-tridecanol or n-lauryl alcohol may be used. The higher alcohol may be either a saturated one or an unsaturated one.

Preferably a drying oil, such as linseed oil, is used as the component for an ink vehicle.

A higher alcohol has a strong affinity for water since the alcohol contains -OH radicals. Therefore, when the composition of the invention is added to an offset printing ink, a moderate amount of water is introduced in the ink. And the ink and the water becomes uniformly mixed as the cylinders of an offset press are rotated. Thus, while the cylinders are being rotated, the ink flows well with the result that an image is printed accurately on a paper in a short period of time.

Once the paper thus printed has been removed from the impression cylinder, the water mixed with the ink is no longer subjected to the force of the cylinders to mix the water and the ink. The water is now stationary on the paper. Then, the higher alcohol in the ink causes the water in the ink to separate from the ink since the higher alcohol has the property of destroying an emulsion. The greater part of the water evaporates while the remaining part thereof is absorbed in the paper. The ink on the paper thus dries quickly.

Since the additive of the invention consists of a uniform mixture of a higher alcohol or alcohols and one or more components for an ink vehicle, the additive may be readily mixed with an offset printing ink where the offset printing is actually made.

A higher alcohol with 11 or less carbons in the carbon chain may affect the vehicle in the ink adversely after the printing has been made. A higher alcohol with 19 or more carbons in the carbon chain may be incapable of introducing a sufficient amount of water in the ink nor separating the water introduced in the ink sufficiently from the ink again.

In particular, if an offset printing ink containing the additive of the invention is used, a clearly outlined image with a beautiful gloss is produced on a paper. Also, the printing may be made in a short period of time. Moreover, the water used for the printing dries quickly. Therefore, it is not necessary to use a drier. Furthermore, if an image offset printed on a paper is transferred to pottery or glass while applying heat to the pottery or glass, the image on the pottery or glass has a surface not corrugated or cracked.

Two examples of the invention will now be described.

Example 1

The following components were evenly mixed together at a normal temperature:

| Components | Proportions Used (parts by weight) |
| --- | --- |
| n-tridecanol | 50.0 |
| linseed oil | 25.0 |
| ink vehicle | 25.0 |

As is well known, n-tridecanol is a liquid under a normal temperature.

The mixing was made with a roll mill having three rolls.

Since there is a great difference in viscosity between n-tridecanol and ink, the two materials do not mix well if no substance is used to facilitate the mixing of the two materials. Thus, the linseed oil and the ink vehicle were used as such substances. The ink vehicle was one used commonly for offset printing.

In this specification and claims that will follow, the term "ink vehicle" is used to mean simply a "vehicle", or a liquid in which pigment may be mixed or dispersed to prepare an ink.

Linseed oil also is a material which may be used as an ink vehicle by itself or may be mixed with other material or materials to prepare an ink vehicle.

The mixing of the foregoing three components resulted in producing an almost transparent composition which appeared starch syrup was obtained. The composition was added to an offset printing ink containing no drier, and was uniformly mixed with the latter manually. No difficulty was encountered when mixing the composition and the ink. The mixture obtained was used to offset print a paper.

As a result, a clearly outlined image was produced on the paper. Since the water used for the printing was not emulsified, the image had a clear edge. Also, the image had a smaller dot gain than an image produced by using the conventional offset printing ink. Moreover, the dots on the printing plate were produced on the printed image more exactly than in the conventional offset printing. Furthermore, the image had a beautiful gloss.

In addition, although no drier was added to the ink, the ink transferred to the paper dried as quickly as an ink containing a drier. It is because the higher alcohol, or n-tridecanol, causes the water to move away from the ink film on the paper.

The amount of the foregoing composition, or additive, to be added to an offset printing ink depends upon such factors as the kinds and proportions of the pigment and the vehicle contained in the ink. Experiments conducted by the inventor have shown that in this example the foregoing object of the invention is substantially achieved when the composition is used by substantially 2 per cent.

Example 2

The following components were heated together to mix the two components uniformly:

| Components | Proportions Used (parts by weight) |
|---|---|
| n-lauryl alcohol | 25.0 |
| linseed oil | 25.0 |

As is well known, n-lauryl alcohol is a solid material like a wax under a normal temperature.

The liquid obtained by mixing the two components was put in a tray of thin metal. The tray was put into cold storage, and the liquid therein was quenched at a temperature of -15°C. As a result, a semitransparent composition which appeared pomade was obtained. The composition was uniformly mixed with an offset printing ink which contains no drier. As with the additive of Example 1, no difficulty was encountered when mixing the composition and the ink. The composition was used by 4 per cent.

The mixture obtained was used to offset print a paper. The result was substantially the same as in Example 1.

Experiments conducted by the inventor have shown that a monohydric higher alcohol having 12 to 18 carbons in the carbon chain is suitable for the invention.

Higher alcohols with carbons in odd numbers are liquids under a normal temperature, while higher alcohols with carbons in even numbers are solid matters under a normal temperature. Also, with a higher alcohol, the greater the number of the double bonds in the carbon chain and the number of the side chains, a higher alcohol, the higher the melting point of the alcohol. Also, generally speaking, the greater the number of carbons, the smaller the affinity for water and the property of destroying the emulsion. Thus, a higher alcohol suitable for a particular offset printing ink may be determined only by trial and error. If necessary, plural kinds of higher alcohols may be used to prepare an additive of the invention.

In each of Examples 1 and 2 linseed oil was used to facilitate the dispersion of the higher alcohol in the ink. However, if desired, a drying oil other than linseed oil may be used if the other kind of drying oil does not hinder the drying of the ink and does not prevent the vehicle in the ink from fulfilling its function.

The optimum proportion or proportions of the component or components of the additive of the invention other than a higher alcohol may be determined by trial and error for a particular kind of offset printing ink.

**Claims**

1. An additive to an offset printing ink which contains at least one kind of higher alcohol and at least one component for an ink vehicle.

2. An additive in accordance with claim 1 wherein the higher alcohol is a monohydric higher alcohol having 12 to 18 carbons in the carbon chain thereof.

3. An additive in accordance with claim 1 wherein the component for an ink vehicle is a drying oil, such as linseed oil.

4. An additive in accordance with claim 2 wherein the component for an ink vehicle is a drying oil, such as linseed oil.